# EUROPÄISCHE PATENTSCHRIFT

(11) **EP 3 115 568 B1**
(45) Veröffentlichungstag und Bekanntmachung des Hinweises auf die Patenterteilung: **18.07.2018**
(21) Anmeldenummer: 16171864.8
(22) Anmeldetag: 30.05.2016
(51) Int. Cl.: F01N 3/20, B60K 15/03

(54) **TANKEINRICHTUNG FÜR EIN ABGASNACHBEHANDLUNGSSYSTEM**
TANK ARRANGEMENT FOR AN EXHAUST GAS AFTERTREATMENT SYSTEM
DISPOSITIF DE RÉSERVOIR POUR UN SYSTÈME DE POST-TRAITEMENT DE GAZ D'ÉCHAPPEMENT

(30) Priorität: 10.07.2015 DE 102015212919
(43) Veröffentlichungstag der Anmeldung: 11.01.2017
(73) Patentinhaber: ROBERT BOSCH GMBH, 70442 Stuttgart (DE)
(72) Erfinder: Klenk, Wolfgang, 74369 Loechgau (DE)

(56) Entgegenhaltungen:
- EP-A1- 2 199 558
- WO-A1-2008/138960
- DE-A1-102013 211 183

## Beschreibung

Die Erfindung betrifft eine Tankeinrichtung, insbesondere für ein Abgasnachbehandlungssystem eines Kraftfahrzeugs, mit einem Tank zur Aufnahme eines flüssigen Mediums, insbesondere Abgasnachbehandlungsmittel, mit einer Entnahmeeinrichtung zum Entnehmen des Mediums aus dem Tank und mit einer in dem Tank der Entnahmeeinrichtung zugeordneten Heizeinrichtung.

Ferner betrifft die Erfindung ein Abgasnachbehandlungssystem mit einer derartigen Tankeinrichtung.

### Stand der Technik

Abgasnachbehandlungssysteme, die mit Abgasnachbehandlungsmittel auf Basis von Harnstoff-Wasserlösungen arbeiten, benötigen einen Tank zur Bereitstellung und Lagerung des Abgasnachbehandlungsmittels, aus dem bedarfsgerecht das Medium entnommen und in das Abgassystem eindosiert werden kann. Die Größe des Tanks und der mittlere Verbrauch des Abgasnachbehandlungsmittels bestimmen die Reichweite des Systems. Bei etwa -11°C gefriert diese Art von Abgasnachbehandlungsmittel. Damit bei niedrigen Temperaturen das Abgasnachbehandlungsmittel dennoch sicher genutzt werden kann, ist es bekannt, den Tank und/oder die Entnahmeeinrichtung bei Bedarf soweit aufzuheizen, dass das Abgasnachbehandlungsmittel wieder in flüssiger Form vorliegt.

Tankeinrichtungen, die mit einem Wärmetauscher ausgestattet sind, der mit warmem Kühlwasser betrieben wird, sind bekannt. Diese Systeme sind typischerweise so ausgelegt, dass der Tank im Betrieb komplett aufgetaut werden kann oder nicht durchfriert. Häufiger werden jedoch elektrische Heizsysteme für Tankeinrichtungen eingesetzt. Diese haben den Vorteil, dass der Anschluss an ein elektrisches System einfacher zu gewährleisten ist, als ein Anschluss an das Kühlwassersystem eines Kraftfahrzeugs. Elektrische Heizsysteme verfügen jedoch typischerweise über eine begrenzte Heizleistung, die in Kombination mit kurzen Fahrzyklen und längeren Abstellphasen dazu führen kann, dass dann, wenn der Tank vollständig gefroren ist, durch die Heizung nur ein kleiner Teil des Abgasnachbehandlungsmittels aufgetaut werden kann. Das aufgetaute Abgasnachbehandlungsmittel wird dem Tank entnommen und dem Abgassystem zugeführt. Damit bilden sich in dem Tank Kavitäten beziehungsweise Luftblasen rund um das jeweilige Heizelement der Heizeinrichtung. Damit wird der Energieübertrag von dem Heizelement zu dem noch gefrorenen Abgasnachbehandlungsmittel verringert und infolge sinkt die Auftauleistung der Heizeinrichtung. Die Menge an flüssigem Abgasnachbehandlungsmittel, die eigentlich durch die Wärmeübertragung erreicht werden sollte, wird dadurch reduziert.

Die Offenlegungsschrift EP 2 199 558 A1 beschreibt eine Tankeinrichtung mit einem Tank zur Aufnahme eines flüssigen Mediums, einer Entnahmeeinrichtung zum Entnehmen des Mediums aus dem Tank und eine der Entnahmeeinrichtung zugeordnete Heizeinrichtung. Die Heizeinrichtung weist zumindest zwei bi-metallartig ausgebildete Heizelemente auf, die in einem kühlen Zustand konkav und in einem erwärmten Zustand konvex gewölbt sind. Aus der Offenlegungsschrift DE 10 2013 211183 A1 geht eine Entnahmeeinrichtung für eine Tankvorrichtung eines Fahrzeugs hervor. Die Entnahmeeinrichtung weist eine erste Heizeinrichtung mit einem ersten einer Entnahmeöffnung der Entnahmeeinrichtung zugeordneten Heizelement auf. Dabei ist eine zweite Heizeinrichtung vorgesehen, die ein beabstandet von der Entnahmeöffnung angeordnetes zweites Heizelement aufweist. Weiterhin zeigt die Offenlegungsschrift WO 2008/138960 A1 einen Tank mit einer integrierten Heizeinrichtung, wobei die Heizeinrichtung verschwenkbare Heizelemente aufweist.

### Offenbarung der Erfindung

Die erfindungsgemäße Tankeinrichtung mit den Merkmalen des Anspruchs 1 hat den Vorteil, dass größere Bereiche als bisher mit einem elektrischen Heizsystem aufgetaut werden können. Insbesondere wird gewährleistet, dass das jeweilige Heizelement dem aufgetauten Abgasnachbehandlungsmittel nachgeführt wird, sodass es noch gefrorenes Abgasnachbehandlungsmittel mit ausreichend Wärme zum Auftauen beaufschlagt. Erfindungsgemäß ist hierzu vorgesehen, dass die Heizeinrichtung wenigstens zwei verschwenkbare Heizelemente aufweist. Durch das Verschwenken der Heizelemente lassen sich weitere Bereiche des Tanks durch das jeweilige Heizelement mit Wärme versorgen. So kann das jeweilige Heizelement nach Auftauen eines ersten Bereichs weiterverschwenkt werden, um einen weiteren Bereich aufzutauen. Dadurch wird die Ausbeute an flüssigem Abgasnachbehandlungsmittel aus dem Tank bei Umgebungstemperaturen unterhalb des Gefrierpunkts sicher erhöht.

Gemäß einer bevorzugten Ausführungsform der Erfindung ist vorgesehen, dass das jeweilige Heizelement zum Verschwenken elastisch verformbar ausgebildet ist. Durch die Verformbarkeit des jeweiligen Heizelements lässt sich dieses einfach in unterschiedliche Formen bringen und in dem Tank ausrichten, sodass dieser vorteilhaft aufgetaut wird.

Weiterhin ist erfindungsgemäß vorgesehen, dass das jeweilige Heizelement durch Erwärmung verformbar ausgebildet ist. Damit erfolgt die Verformung des jeweiligen Heizelements durch seine eigene Erwärmung. Dadurch wird die Energie zum Verformen des jeweiligen Heizelements durch das jeweilige Heizelement selbst zur Verfügung gestellt.

Erfindungsgemäß ist vorgesehen, dass das jeweilige Heizelement bi-metallartig ausgebildet ist. Dazu weist das jeweilige Heizelement beispielsweise zwei miteinander verbundene Metallteile, die gegeneinander elektrisch isoliert und nur in einem freien Ende miteinander elektrisch verbunden sind, auf. Auch ist es denkbar, eine Metallschicht verbunden mit einer Kunststoffschicht vorzusehen. Auch ist es denkbar, Kunststoffschichten mit eingelegten oder aufgebrachten Heizelementen auszubilden. Auch kann die bi-Metallfunktion sowie die Heizfunktion über eine oder zwei elektrisch leitende Kunststoffelemente realisiert werden.

Erfindungsgemäß ist vorgesehen, dass das jeweilige Heizelement in einem kühlen Zustand gekrümmt und in einem erwärmten Zustand gestreckt ist. Insbesondere durch die bi-metallartige Ausbildung ist dies auf einfache Art und Weise erreichbar. Durch den gekrümmten kühlen Zustand ist die Heizwirkung des jeweiligen Heizelements auf einen kleineren Raum beschränkt. Insbesondere ist das jeweilige Heizelement in diesem Zustand im Wesentlichen der Entnahmeeinrichtung und besonders bevorzugt einer Entnahmeöffnung der Entnahmeeinrichtung zugeordnet, um dort, wo das Abgasnachbehandlungsmittel entnommen werden soll, dieses besonders schnell aufzutauen. Mit zunehmender Erwärmung drängt das jeweilige Heizelement dann in seine gestreckte Stellung, sodass es einem Bereich zugeführt wird, welcher noch gefroren ist. Erst dann, wenn auch dieser Bereich aufgetaut ist, dann kann das jeweilige Heizelement sich weiter ausstrecken. Dadurch erfolgt eine automatische Nachführung des Heizelements in dem Tank, um diesen vollständig oder zumindest weitestgehend aufzutauen.

Erfindungsgemäß sind mindestens zwei Heizelemente der Entnahmeeinrichtung zugeordnet, sodass sie die Entnahmeeinrichtung im kühlen Zustand umringen beziehungsweise durch ihre Krümmung ringförmig umgeben. Dadurch wird die Entnahmeeinrichtung zu Beginn eines Heizvorgangs vorteilhaft aufgetaut und erwärmt.

Weiterhin ist bevorzugt vorgesehen, dass alternativ (nicht erfindungsgemäß) oder zusätzlich wenigstens ein Heizelement an der Entnahmeeinrichtung verschwenkbar gelagert ist. Damit erfolgt das Verschwenken nicht oder nicht nur durch eine Verformung des Heizelements, sondern durch eine Lagerung an der Entnahmeeinrichtung.

Bevorzugt ist dem jeweiligen Heizelement eine Verstelleinrichtung zum Verschwenken des jeweiligen Heizelements zugeordnet. Durch die Verstelleinrichtung ist das jeweilige Heizelement in die gewünschte Richtung verschwenkbar. Dabei kann die Verstelleinrichtung dazu ausgebildet sein, das Heizelement gezielt oder bedarfsgerecht zu verschwenken. Insbesondere weist die Verstelleinrichtung ein Wärmedehnelement zum Verschwenken auf. Durch das Aufwärmen des Wärmedehnelements nimmt dieses an Volumen zu und drängt dann das jeweilige Heizelement in eine bestimmte Richtung. Somit wird auch die Heizwärme des jeweiligen Heizelements in diesem Fall zu einer Verstellung genutzt. Alternativ kann die Verstelleinrichtung einen elektromotorischen oder elektromagnetischen Aktuator aufweisen. Auch ist es denkbar, dass die Verstelleinrichtung ein oder mehrere Federelemente zum Verstellen des jeweiligen Heizelements umfasst.

Gemäß einer bevorzugten Weiterbildung der Erfindung ist vorgesehen, dass die Heizeinrichtung wenigstens einen an der Entnahmeeinrichtung angeordneten LED-Strahler aufweist. Durch Ansteuern des LED-Strahlers wird das Auftauen des gefrorenen Abgasnachbehandlungsmittels vorteilhaft unterstützt. Insbesondere ist der oder sind die LED-Strahler derart ausgebildet/ausgerichtet, dass sie Bereiche des Tanks erreichen, die von den Heizelementen nicht erreichbar sind. Gemäß einer alternativen Erfindung ist außerdem vorgesehen, dass die Heizeinrichtung anstelle der Heizelemente den oder die LED-Strahler aufweist.

Das erfindungsgemäße Abgasnachbehandlungssystem mit den Merkmalen des Anspruchs 10 zeichnet sich durch die erfindungsgemäße Tankeinrichtung aus. Es ergeben sich hierdurch die bereits genannten Vorteile. Weitere Vorteile und bevorzugte Merkmale ergeben sich aus dem zuvor Beschriebenen sowie aus den Ansprüchen.

Im Folgenden soll die Erfindung anhand der Zeichnung näher erläutert werden. Dazu zeigen
- Figur 1: eine Tankeinrichtung für ein Abgasnachbehandlungssystem in einer vereinfachten Draufsicht,
- Figuren 2A und 2B: eine vereinfachte Darstellung einer Entnahmeeinrichtung der Tankeinrichtung in unterschiedlichen Betriebszuständen und
- Figuren 3A und 3B: unterschiedliche Ausführungsformen der Heizelemente.

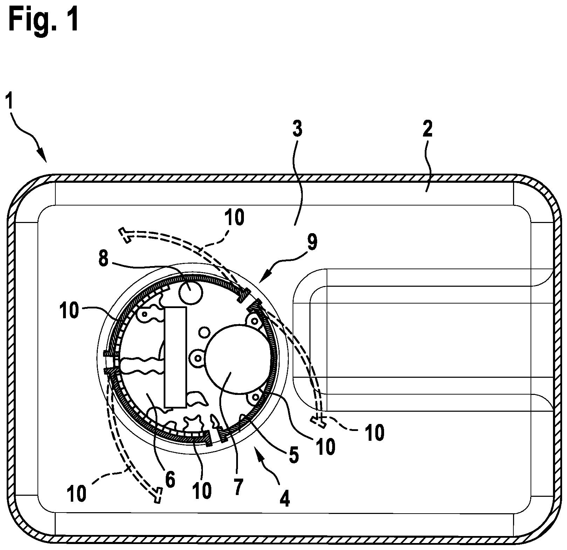

Figur 1 zeigt in einer vereinfachten Draufsicht eine Tankeinrichtung 1 für ein Abgasnachbehandlungssystem eines Kraftfahrzeugs. Die Tankeinrichtung 1 weist einen Tank 2 auf, der zur Aufnahme und Bereitstellung eines flüssigen Abgasnachbehandlungsmittels dient und in der Figur 1 geschnitten dargestellt ist. An dem Boden 3 des Tanks 2 ist eine Entnahmeeinrichtung 4 angeordnet. Gemäß dem vorliegenden Ausführungsbeispiel weist der Tank 2 in seinem Boden eine Öffnung 5 auf, in welche die Entnahmeeinrichtung 4 modulartig von außen die Öffnung 5 abdichtend eingebracht ist. Die Entnahmeeinrichtung 4 weist einen Träger 6 auf, auf welchem eine Fördereinrichtung 7, ein Füllstandssensor 8 und ein oder mehrere Filterelemente angeordnet sind. Die Fördereinrichtung 7 umfasst insbesondere eine Pumpe sowie einen Elektromotor zum Antreiben der Pumpe. Weiterhin weist die Entnahmeeinrichtung 4 eine Entnahmeöffnung auf, die beispielsweise in dem Träger 6 ausgebildet und mit einem Saugeinlass der Fördereinrichtung 7 fluidtechnisch verbunden ist. An ihrer hier nicht sichtbaren Rückseite weist die Entnahmeeinrichtung 4 Anschlüsse für wenigstens eine Förderleitung und mindestens eine elektrische Versorgungsleitung auf.

Im Normalbetrieb, wenn sich flüssiges Abgasnachbehandlungsmittel in dem Tank 2 befindet, wird dieses durch Antreiben der Fördereinrichtung 7 entnommen, indem es in die Entnahmeöffnung gesaugt und durch die Fördereinrichtung 7 beispielsweise einem Dosierventil des Abgasnachbehandlungssystems, das einem Abgasstrang zugeordnet ist, zugeführt. Sinken jedoch die Umgebungstemperaturen auf einen Wert unterhalb des Gefrierpunktes des Abgasnachbehandlungsmittels, so gefriert dieses in dem Tank 2 und eine Entnahme des Abgasnachbehandlungsmittels ist nicht mehr ohne Weiteres möglich.

Die Entnahmeeinrichtung 4 weist deshalb vorliegend weiterhin eine Heizeinrichtung 9 auf, die gemäß dem vorliegenden Ausführungsbeispiel drei Heizelemente 10 aufweist. Die Heizelemente 10 sind dabei jeweils strebenartig ausgebildet und einendig an dem Träger 6 befestigt. Die Heizelemente 10 sind bi-metallartig ausgebildet, sodass sich ihre Form verändert, wenn sie erwärmt werden. Figur 1 zeigt dazu die Heizelemente im kühlen Zustand durch durchgezogene Linien und im erwärmten Zustand durch gestrichelte Linien.

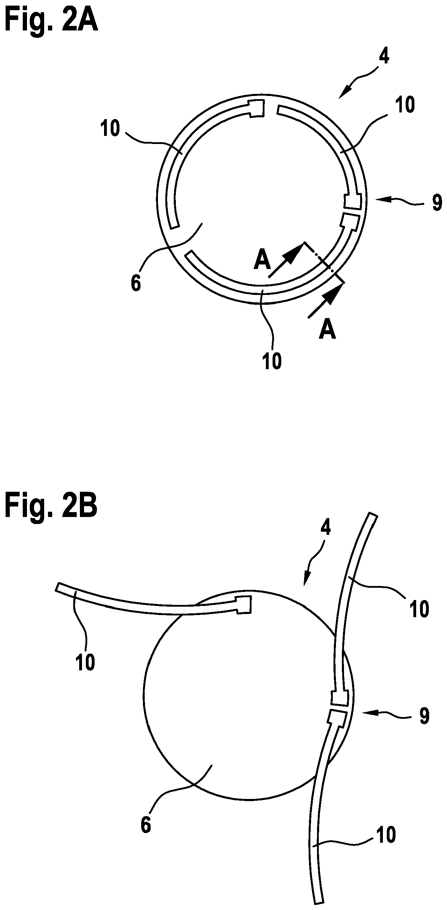

Figuren 2A und 2B sollen dieses Prinzip näher erläutern. Figuren 2A und 2B zeigen jeweils eine Draufsicht auf die Entnahmeeinrichtung 4 mit den daran angeordneten Heizelementen 10. Auf die weiteren Elemente und Komponenten der Entnahmeeinrichtung 4 ist aus Übersichtlichkeitsgründen in Figuren 2A und 2B verzichtet worden.

Figur 2A zeigt einen Ausgangszustand der Tankeinrichtung 1, wenn die Heizeinrichtung 9 nicht aktiviert ist und das Abgasnachbehandlungsmittel in dem Tank 2 gefroren ist. In diesem Zustand sind die Heizelemente 10 gekrümmt, und zwar derart, dass sie sich entlang des Außenrandes des kreisförmigen Trägers 6 erstrecken. Die Heizelemente 10 umringen somit im Wesentlichen die Entnahmeeinrichtung 4.

Die Heizelemente 10 sind bi-metallartig ausgebildet. Werden sie erwärmt, führt dies zu einer Streckung der Heizelemente 10, sodass sie sich aus der gekrümmten Form in eine im Wesentlichen gestreckte Form, wie sie in Figur 2B gezeigt ist, verformen. Durch Aktivieren der Heizeinrichtung 9 passen sich somit die Heizelemente 10 immer an die aktuelle Position der Eisfront des gefrorenen Abgasnachbehandlungsmittels an und können damit stets Wärme an das gefrorene Abgasnachbehandlungsmittel übertragen, auch wenn ansonsten das schon aufgetaute Abgasnachbehandlungsmittel zur Dosierung dem Tank 2 mittels der Entnahmeeinrichtung 4 entnommen wurde.

Figur 2B zeigt insofern einen Zustand, in welchem die aktivierte Heizeinrichtung 9 bereits einen beträchtlichen Bereich des gefrorenen Abgasnachbehandlungsmittels aufgetaut hat. Wird in diesem Zustand die Heizeinrichtung deaktiviert, und das Abgasnachbehandlungsmittel soweit abgekühlt, dass es einen Gefrierpunkt erreicht, dann wird vor dem Gefrieren des Abgasnachbehandlungsmittels das jeweilige Heizelement 10 ebenfalls abkühlen und dadurch zurück in seine gekrümmte Ausgangsform, wie sie in Figur 2A gezeigt ist, gelangen. Die Heizelemente 10 sind insofern also verschwenkbar an dem Träger 6 der Entnahmeeinrichtung 4 ausgebildet, wobei das Verschwenken durch den Wärmeeintrag der Heizelemente 10 selbst erfolgt. Das Verschwenken der Heizelemente 10 ist dabei nicht unbedingt auf die Ebene des Bodens beziehungsweise des Trägers 6 beschränkt. Vielmehr können die Heizelemente 10 auch derart an dem Träger 6 angeordnet sein, dass sie sich bei Erwärmung zusätzlich oder alternativ auch in Richtung einer Tankoberseite des Tanks 2, also aus der Papierebene von Figuren 1 und 2 heraus, bewegen.

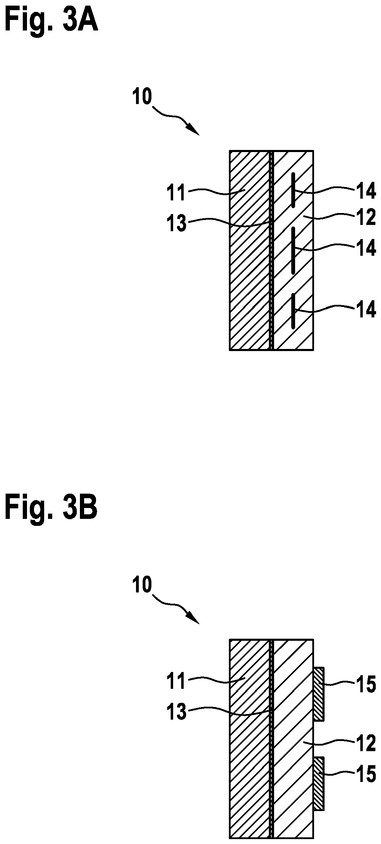

Figuren 3A und 3B zeigen zwei unterschiedliche Ausführungsformen der Heizelemente 10 anhand eines im Querschnitt gezeigten Heizelements 10 gemäß Linie A-A aus Figur 2A. Wie bereits erwähnt, sind die Heizelemente 10 bevorzugt bi-metallartig ausgebildet. Gemäß dem ersten Ausführungsbeispiel von Figur 3A ist vorgesehen, dass das Heizelement 10 aus zwei Schichten 11, 12 gebildet ist, die insbesondere Materialien mit unterschiedlicher Wärmedehnung aufweisen. Je nach Ausführungsform können aber auch Materialien mit dem gleichen Wärmedehnungskoeffizienten oder sogar gleiche Materialien verwendet werden.

Insbesondere kann vorgesehen sein, dass die beiden Schichten durch zwei Metalle gebildet werden, die resistent gegenüber dem Abgasnachbehandlungsmittel sind und gegeneinander elektrisch isoliert sind, wozu zwischen den Schichten noch eine Isolationsschicht 13 liegt. Nur an ihren freien Enden, sind die Metallschichten 11, 12 miteinander elektrisch verbunden und bilden somit letztendlich selbst die elektrische Heizung. Gemäß dem Ausführungsbeispiel von Figur 3A ist vorgesehen, dass in einer der Schichten 12 eine Stanzgitterheizung 14 eingebracht ist, die die Schicht 12 erwärmt. Aufgrund der unterschiedlichen Wärmeausdehnungskoeffizienten und/oder der unterschiedlichen Erwärmung kann dann auch auf Basis gleicher beziehungsweise gleichartiger Schichten 11, 12 die ursprüngliche gekrümmte Form des Heizelements 10 gestreckt werden.

Gemäß dem Ausführungsbeispiel von Figur 3B ist vorgesehen, dass die Schichten 11, 12 unterschiedliche Materialien aufweisen, die insbesondere unterschiedliche Wärmeausdehnungskoeffizienten aufweisen. Anstelle einer in einer der Schichten integrierten Stanzgitterheizung 14 ist bei dem Ausführungsbeispiel von Figur 3B vorgesehen, dass Heizelemente, insbesondere Heizlitzen, auf der Außenseite des Heizelements 10 an einer der Schichten 12 angebracht sind. Werden die Heizlitzen 15 bestromt, so erwärmen sie sich und die Schichten 11, 12, wobei aufgrund der unterschiedlichen Wärmeausdehnungskoeffizienten das zuvor gekrümmte Heizelement 10 gestreckt wird, wie in Figur 2B gezeigt.

Bei den unterschiedlichen Schichten 11, 12 kann es sich beispielsweise um eine Metallschicht und um eine Kunststoffschicht handeln. Alternativ, bei Vorsehen gleicher Materialien, können die beiden Schichten 11, 12 auch jeweils aus Kunststoff gefertigt sein, wobei wie in Figur 3A gezeigt, insbesondere an einer der Schichten ein Heizelement, beispielsweise in der Art der Stanzgitterheizung 14 eingebracht ist. Auch kann vorgesehen sein, dass in beide Schichten 11, 12 jeweils eine entsprechende Heizeinrichtung eingelegt/eingebracht ist. Auch können die Schichten 11 und/oder 12 jeweils aus einem elektrisch leitenden Kunststoff gefertigt sein, der selbst die Heizung bildet. Alternativ zu den dargestellten Ausführungsbeispielen ist es außerdem denkbar, die Heizelemente 10 einendig an dem Träger 6 verschwenkbar zu lagern. Dadurch ist eine Verformung der Heizelemente 10 selbst nicht mehr nötig. Stattdessen werden die Heizelemente 10 einfach an dem Träger 6 nach außen geschwenkt. Zum Verschwenken kann den Heizelementen 10 eine Verstelleinrichtung zugeordnet sein, die die Heizelemente aktiv oder beispielsweise federkraftbeaufschlagt oder durch ein Wärmedehnelement verschwenkt.

Zusätzlich oder alternativ kann außerdem vorgesehen sein, dass zur Beheizung des Tanks 2 ein oder mehrere LED-Strahler eingesetzt und insbesondere an den Träger 6 der Entnahmeeinrichtung 4 angeordnet werden. Die LED-Strahler emitieren zum Auftauen Licht in einem derartigen Frequenzbereich, dass es an der Oberfläche des gefrorenen Abgasnachbehandlungsmittels absorbiert wird und dadurch das gefrorene Abgasnachbehandlungsmittel auftaut.

## Patentansprüche

1. Tankeinrichtung (1), insbesondere für ein Abgasnachbehandlungssystem eines Kraftfahrzeugs, mit einem Tank (2) zur Aufnahme eines flüssigen Mediums, insbesondere Abgasnachbehandlungsmittel, mit einer Entnahmeeinrichtung (4) zum Entnehmen des Mediums aus dem Tank (2) und mit einer in dem Tank (2) der Entnahmeeinrichtung (4) zugeordneten Heizeinrichtung (9), wobei die Heizeinrichtung (9) wenigstens zwei verschwenkbare Heizelemente (10) aufweist, wobei die Heizelemente (10) zum Verschwenken bi-metallartig durch Erwärmung verformbar ausgebildet und in einem kühlen Zustand gekrümmt sind, **dadurch gekennzeichnet, dass** die Heizelemente (10) die Entnahmeeinrichtung (4) im kühlen Zustand durch ihre Krümmung zumindest im Wesentlichen ringförmig umgeben, und wobei die Heizelemente (10) in einem erwärmten Zustand gestreckt sind.

2. Tankeinrichtung nach Anspruch 1, **dadurch gekennzeichnet, dass** die Heizelemente (10) an der Entnahmeeinrichtung (4) verschwenkbar gelagert sind.

3. Tankeinrichtung nach einem der vorhergehenden Ansprüche, **dadurch gekennzeichnet, dass** den Heizelementen (10) eine Verstelleinrichtung zum Verschwenken des Heizelements (10) zugeordnet ist.

4. Tankeinrichtung nach einem der vorhergehenden Ansprüche, **dadurch gekennzeichnet, dass** die Heizeinrichtung (9) wenigstens einen LED-Strahler aufweist.

5. Abgasnachbehandlungssystem, insbesondere für ein Kraftfahrzeug, **gekennzeichnet durch** eine Tankeinrichtung (1) nach einem der Ansprüche 1 bis 4.

## Claims

1. Tank device (1), in particular for an exhaust gas after-treatment system of a motor vehicle, having a tank (2) for holding a liquid medium, in particular exhaust gas after-treatment medium, having a removal device (4) for removing the medium from the tank (2) and having a heating device (9) which is assigned to the removal device (4) in the tank (2), wherein the heating device (9) has at least two pivotable heating elements (10), wherein the heating elements (10) are embodied in a bi-metal fashion so as to be deformable by heating for the purpose of pivoting and are curved in a cool state, **characterized in that** the heating elements (10) surround the removal device (4) in the cool state at least essentially in an annular shape as a result of their curvature, and wherein the heating elements (10) are extended in their heated state.

2. Tank device according to Claim 1, **characterized in that** the heating elements (10) are pivotably mounted on the removal device (4).

3. Tank device according to one of the preceding claims, **characterized in that** the heating elements (10) are assigned an adjustment device for pivoting the heating element (10).

4. Tank device according to one of the preceding claims, **characterized in that** the heating device (9) has at least one LED radiator.

5. Exhaust gas after-treatment system, in particular for a motor vehicle, **characterized by** a tank device (1) according to one of Claims 1 to 4.

## Revendications

1. Dispositif de réservoir (1), en particulier pour un système de post-traitement de gaz d'échappement d'un véhicule automobile, comprenant un réservoir (2) destiné à recevoir un milieu fluide, en particulier un milieu de post-traitement de gaz d'échappement, un dispositif de prélèvement (4) pour prélever le milieu hors du réservoir (2) et un dispositif de chauffage (9) associé au dispositif de prélèvement (4) dans le réservoir (2), le dispositif de chauffage (9) présentant au moins deux éléments chauffants pivotants (10), les éléments chauffants (10), pour pouvoir pivoter étant réalisés de manière déformable par chauffage à la manière d'un bilame et, dans un état refroidi, étant courbés, **caractérisé en ce que** les éléments chauffants (10) entourent au moins essentiellement par leur courbure le dispositif de prélèvement (4) dans l'état refroidi, et les éléments chauffants (10) étant étirés dans un état chauffé.

2. Dispositif de réservoir selon la revendication 1, **caractérisé en ce que** les éléments chauffants (10) sont supportés de manière à pouvoir pivoter au niveau du dispositif de prélèvement (4).

3. Dispositif de réservoir selon l'une quelconque des revendications précédentes, **caractérisé en ce qu'**un dispositif de réglage pour faire pivoter l'élément chauffant (10) est associé aux éléments chauffants (10).

4. Dispositif de réservoir selon l'une quelconque des revendications précédentes, **caractérisé en ce que** le dispositif de chauffage (9) présente au moins un projecteur à LED.

5. Système de post-traitement de gaz d'échappement, en particulier pour un véhicule automobile, **caractérisé par** un dispositif de réservoir (1) selon l'une quelconque des revendications 1 à 4.
